# EUROPEAN PATENT SPECIFICATION

(11) **EP 3 091 632 B1**
(45) Date of publication and mention of the grant of the patent: **17.01.2018**
(21) Application number: 16168331.3
(22) Date of filing: 04.05.2016
(51) Int. Cl.: H02J 7/00, H02J 7/04, H02J 7/02, H01M 10/42

(54) **CHARGING CONTROL CIRCUIT OF MOBILE DEVICE**
LADUNGSSTEUERUNGSSCHALTUNG EINER MOBILEN VORRICHTUNG
CIRCUIT DE COMMANDE DE CHARGE DE DISPOSITIF MOBILE

(30) Priority: 07.05.2015 US 201562158460 P; 28.04.2016 CN 201610278760
(43) Date of publication of application: 09.11.2016
(73) Proprietor: Richtek Technology Corporation, 302 Chupei City, Hsinchu (TW)
(72) Inventor: SHIU, Yi-Min, 300 Hsinchu City (TW); CHEN, Yu-Chang, 552 Jiji Township, Nantou County (TW); CHI, Chih-Wei, 235 New Taipei City (TW); CHAN, Chen-Hui, 116 Taipei City (TW)
(74) Representative: Viering, Jentschura & Partner mbB Patent- und Rechtsanwälte

(56) References cited:
- CN-A- 103 762 702
- US-A1- 2010 013 442
- US-A1- 2013 099 745
- US-A1- 2013 300 376
- US-A1- 2014 136 863

## Description

The present invention relates to a charging control circuit according to the precharacterizing clauses of claim 1.

The battery capacity is the major bottleneck to the usage time of a mobile device, and the time required for charging the battery is proportional to the battery capacity. The charging speed of the mobile device can be improved by increasing the current transmitted through the charging cable, but large current flowing through the charging cable easily results in overheat problem to the charging cable or associated connector and may thus cause danger during the charging process. US Patent Application Publication No. 2010/0013442A1 provided a charging system, an electronic circuit device including secondary cell, and a power supply device for charging. US Patent Application Publication No. 2013/0099745A1 provided an external power source voltage drop compensation for portable devices. US Patent Application Publication No. 2014/0136863A1 provided high voltage charging techniques for portable devices. US Patent Application Publication No. 2013/0300376A1 provided a power supply system for providing power and analog data signals for use by portable electronic device to control battery charging. Document CN103762702 A discloses a charging device of an electronic equipment. A main control circuit adjusts the output voltage and the output current of a power adapter to a quick charge current value and a quick charge voltage value respectively. The main control circuit obtains the battery voltage information from the electronic device, and determines, according to the voltage detection signal fed back by a voltage detection circuit, whether the difference between the output voltage of the power adapter and the battery voltage exceeds a voltage difference threshold, if yes, it indicates that the line impedance between the power adapter and the electronic device or between the power adapter and the battery is abnormal, and the main control circuit controls an output switch circuit to switch off the direct current output of the power adapter; if no, the main control circuit, according to the battery voltage information, adjust the output current of the power adapter, and continues to obtain the battery voltage information from the charging control circuit so as to make cyclical adjustment to the output current of the power adapter during quick charge to the battery. In this way, the process of quick charge to the battery can be optimized and the charging time is reduced.

To avoid causing danger during the charging process, the circuitry components of the conventional charging device and the charging cable are designed to have matched specifications. Accordingly, the charging device can only cooperate with a dedicated charging cable, and the user is not permitted to replace the charging cable with another charging cable having different specification. Since the architecture of the conventional charging device severely restricts the replacement flexibility of the charging cable, the usage convenience and application scope of the conventional charging device is greatly reduced.

This in mind, the present invention aims at providing a charging control circuit that utilizes a device-side control circuit to generate an adjustment instruction based on a voltage drop estimation value and to transmit the adjustment instruction through a data signal to a mobile charger so that the mobile charger adjusts magnitude of at least one of resulting DC current signal and DC voltage signal to control a voltage drop of a charging cable to be less than a predetermined threshold.

This is achieved by a charging control circuit according to claim 1. The dependent claims pertain to corresponding further development and improvements.

As will be seen more clearly from the detailed description following below, the claimed charging control circuit includes a device-side control circuit capable of transmitting a data signal to an adaptive power converter of a mobile charger so that the adaptive power converter adjusts the magnitude of resulting DC current signal or DC voltage signal to control a voltage drop of a charging cable to be less than a predetermined threshold.

In the following, the invention is further illustrated by way of example, taking reference to the accompanying drawings. Thereof
FIG. 1 is a simplified schematic diagram of a mobile device charging system according to one embodiment of the present disclosure,
FIG. 2 is a simplified functional block diagram of the mobile device charging system of FIG. 1 according to one embodiment of the present disclosure,
FIG. 3 is a simplified functional block diagram of the adaptive power converter in FIG. 2,
FIG. 4 is a simplified functional block diagram of another adaptive power converter in FIG. 2,
FIG. 5 is a simplified functional block diagram of the charging control circuit in FIG. 2 according to one embodiment of the present disclosure,
FIG. 6 is a simplified functional block diagram of the charging control circuit in FIG. 2 according to another embodiment of the present disclosure,
FIG. 7 is a simplified functional block diagram of the mobile device charging system of FIG. 1 when a foreign object is present therein according to one embodiment of the present disclosure,
FIG. 8 is a simplified flowchart of a mobile device charging method according to the present disclosure,
FIG. 9 is a simplified schematic diagram of a mobile device charging system according to another embodiment of the present disclosure, and
FIG. 10 is a simplified functional block diagram of the mobile device charging system of FIG. 9 according to one embodiment of the present disclosure.

Reference is made in detail to embodiments of the invention, which are illustrated in the accompanying drawings. The same reference numbers may be used throughout the drawings to refer to the same or like parts, components, or operations.

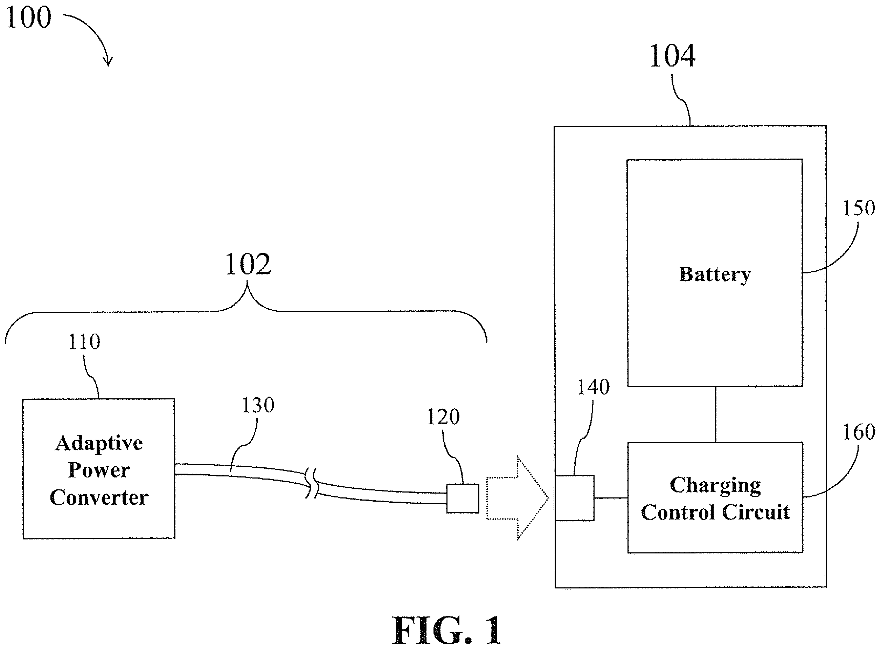

FIG. 1 shows a simplified schematic diagram of a mobile device charging system 100 according to one embodiment of the present disclosure. As shown in FIG. 1, the mobile device charging system 100 comprises a mobile charger 102 and a mobile device 104, wherein the mobile charger 102 can be utilized for charging the mobile device 104.

The mobile charger 102 comprises an adaptive power converter 110, an output terminal 120, and a charging cable 130. The adaptive power converter 110 is arranged to operably receive data signals and capable of generating a DC voltage signal and a DC current signal. The charging cable 130 is coupled between the adaptive power converter 110 and the output terminal 120, and arranged to operably transmit the data signals and capable of receiving the DC voltage signal and DC current signal generated by the adaptive power converter 110 to provide an output voltage signal and an output current signal at the output terminal 120.

The mobile device 104 comprises a device-side connector 140, a battery 150, and a charging control circuit 160. The device-side connector 140 is utilized for detachably connecting with the output terminal 120 to receive the power transmitted from the output terminal 120, and there is a power input path arranged between the device-side connector 140 and the battery 150. The charging control circuit 160 is coupled with the device-side connector 140 and capable of generating and transmitting the data signals to the adaptive power converter 110 through the device-side connector 140 and the charging cable 130.

The adaptive power converter 110 of the mobile charger 102 is arranged to operably adjust the magnitude of the DC voltage signal or the DC current signals based on the content of the data signal transmitted from the charging control circuit 160, so as to control the voltage drop of the charging cable 130 to be less than a predetermined threshold.

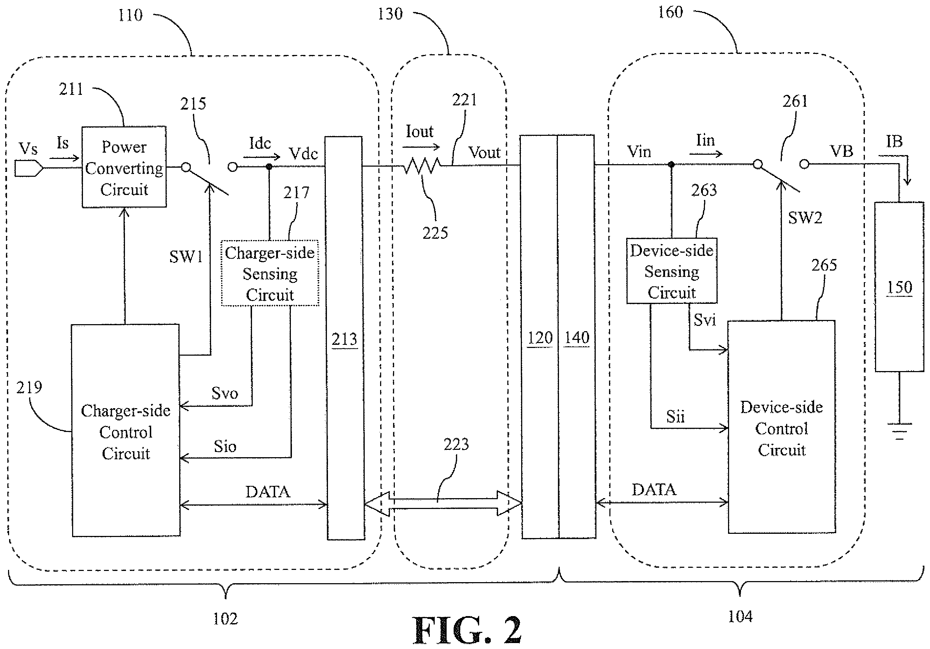

FIG. 2 shows a simplified functional block diagram of the mobile device charging system 100 according to one embodiment of the present disclosure. As shown in FIG. 2, the adaptive power converter 110 comprises a power converting circuit 211, a communication interface 213, an output switch 215, a charger-side sensing circuit 217, and a charger-side control circuit 219. The charging cable 130 comprises a power transmission line 221 and a data transmission line 223, wherein a reference 225 denotes the parasitic resistance of the power transmission line 221. The charging control circuit 160 comprises an input switch 261, a device-side sensing circuit 263, and a device-side control circuit 265.

In the adaptive power converter 110, the power converting circuit 211 is arranged to operably convert a source voltage signal Vs and a source current signal Is into a DC voltage signal Vdc and a DC current signal Idc. The communication interface 213 is arranged to operably transmit a data signal DATA, and there is a power output path arranged between the power converting circuit 211 and the communication interface 213. The communication interface 213 is capable of outputting the DC voltage signal Vdc and the DC current signal Idc to the charging cable 130, so that the charging cable 130 provides the output voltage signal Vout and the output current signal Iout to the output terminal 120, The output switch 215 is positioned on the aforementioned power output path, and utilized for selectively conducting the DC voltage signal Vdc and the DC current signal Idc generated by the power converting circuit 211 to the communication interface 213. The charger-side sensing circuit 217 is arranged to operably sense the signals on the power output path (e.g., the signal Vdc or the signal Idc) to generate a corresponding output voltage sensing signal Svo and/or an output current sensing signal Sio. The charger-side control circuit 219 is coupled with the power converting circuit 211 and the communication interface 213, and arranged to operably receive the data signal DATA.

In practice, the charger-side sensing circuit 217 may be coupled with the signal path between the power converting circuit 211 and the output switch 215 to sense the signal on the signal path between the power converting circuit 211 and the output switch 215. The charger-side sensing circuit 217 may be coupled with the signal path between the output switch 215 and the communication interface 213 to sense the signal on the signal path between the output switch 215 and the communication interface 213.

In operations, the charger-side control circuit 219 controls the operations of the power converting circuit 211 and the output switch 215 based on the content of the received data signal DATA and/or the sensing result of the charger-side sensing circuit 217 in respect of the signals on the power output path, so as to control the voltage drop of the charging cable 130 to be less than the predetermined threshold.

Depending upon the source device or the type of the source voltage signal Vs and the source current signal Is, the power converting circuit 211 may be implemented with various appropriate boost power converter, buck power converter, buck-boost power converter, or flyback power converter. In other words, the source voltage signal Vs may be an AC voltage signal or a DC voltage signal, and the magnitude of the DC voltage signal Vdc may be greater than that of the source voltage signal Vs or may be lower than that of the source voltage signal Vs. Similarly, the magnitude of the DC current signal Idc may be greater than that of the source current signal Is or may be lower than that of the source current signal Is.

As long as the mobile device 104 can sustain, the DC current signal Idc generated by the power converting circuit 211 may be configured to be 5A, 8A, 10A, or an even larger current value to effectively increase the charging speed of the mobile device 104.

In practice, different functional blocks of the adaptive power converter 110 may be realized with separate circuits, or may be integrated into a single circuit chip. In addition, the output switch 215, the charger-side sensing circuit 217, and/or some components of the power converting circuit 211 (e.g., the power switch and inductive elements, not shown in FIG. 2) may be instead arranged outside the adaptive power converter 110. For example, the output switch 215, the charger-side sensing circuit 217, and/or the power switch and inductive elements of the power converting circuit 211 may be arranged outside the adaptive power converter 110 (e.g., arranged on a circuit board connecting with the adaptive power converter 110) while the other functional blocks of the adaptive power converter 110 are integrated into a single chip.

In the charging cable 130, the power transmission line 221 is utilized for transmitting the power supplied from the adaptive power converter 110 to the mobile device 104, and the data transmission line 223 is utilized for transmitting the data signal DATA. The parasitic resistance 225 of the power transmission line 221 may cause a certain voltage drop of the charging cable 130, but the magnitudes of the output voltage signal Vout and the output current signal Iout provided from the charging cable 130 to the output terminal 120 are typically proportional to the magnitudes of the DC voltage signal Vdc and the DC current signal Idc.

In practice, the charging cable 130 may be realized with various transmission cables capable of simultaneously transmitting power and data. For example, the charging cable 130 may be realized with the USB cable in some embodiments. In this situation, the data signal DATA may be realized with the D+ and D- signals defined by USB series specifications, or may be realized with the CC1 and CC2 signals defined by USB-PD (Universal Serial Bus Power Delivery) series specifications.

In the charging control circuit 160, the input switch 261 is positioned on the power input path between the device-side connector 140 and the battery 150. The input switch 261 is utilized for selectively conducting an input voltage signal Vin and an input current signal Iin which are actually received by the device-side connector 140 to the input terminal of the battery 150 to form a charging voltage signal VB and a charging current signal IB of the battery 150. The device-side sensing circuit 263 is arranged to operably sense the signal on the power input path (e.g., the signal Vin, Iin, VB, and/or IB) to generate a corresponding input voltage sensing signal Svi and/or an input current sensing signal Sii. The device-side control circuit 265 is coupled with the device-side connector 140, the input switch 261, and the device-side sensing circuit 263. The device-side control circuit 265 is arranged to operably control the input switch 261 based on the sensing result of the device-side sensing circuit 263 in respect of the signal on the power input path, to prevent the magnitude of the charging voltage signal VB and/or the charging current signal IB of the battery 150 to exceed a safety level. In addition, the device-side control circuit 265 is also capable of generating and transmitting the data signal DATA to the charger-side control circuit 219 through the device-side connector 140, the charging cable 130, and the communication interface 213 based on the sensing result of the device-side sensing circuit 263 in respect of the signal on the power input path.

In practice, the device-side sensing circuit 263 may be coupled with the signal path between the device-side connector 140 and the input switch 261 to sense the signal (e.g., signal Vin and/or signal Iin) on the signal path between the device-side connector 140 and the input switch 261. The device-side sensing circuit 263 may be coupled with the signal path between the input switch 261 and the battery 150 to sense the signal (e.g., signal VB and/or signal IB) on the signal path between the input switch 261 and the battery 150.

Additionally, different functional blocks of the charging control circuit 160 may be realized with separate circuits, or may be integrated into a single circuit chip. For example, the device-side sensing circuit 263 may be instead arranged outside the charging control circuit 160 (e.g., arranged on a circuit board connecting with the charging control circuit 160) while the other functional blocks of the charging control circuit 160 are integrated into a single chip.

For simplicity of illustration, other components in the adaptive power converter 110, the charging cable 130, and the charging control circuit 160, and their connection relationships are not illustrated in FIG. 2.

In practice, the mobile charger 102 may be implemented as a power adapter, a mobile power bank, a car charger, or any other device capable of supplying programmable DC voltage and current in response to the instruction of the mobile device 104.

Additionally, the mobile device 104 may be realized with various portable electronic devices, such as a mobile phone, a tablet PC, a notebook computer, a netbook computer, a portable video display, or the like.

The charging cable 130 typically has a certain parasitic resistance, and the value of the parasitic resistance is correlated with the length of the charging cable 130. Accordingly, the voltage and/or current actually received by the mobile device 104 is lower than the DC voltage and DC current generated by the adaptive power converter 110. In addition, different the charging cable 130 causes different voltage drop, and the same charging cable 130 may has different voltage drop in different life stages or in different operating environments.

In order to offer the user replacement flexibility of the charging cable 130 while maintaining the safety during the charging process, the adaptive power converter 110 or the charging control circuit 160 is arranged to dynamically estimate the voltage drop of the charging cable 130 based on the sensing result in respect of the signal on the power input path (e.g., signal Vin, Iin, VB, and/or IB). Then the adaptive power converter 110 or the charging control circuit 160 may further instruct the power converting circuit 211 to adjust the magnitude of the DC voltage signal Vdc and the DC current signal Idc based on the voltage drop estimation, so as to control the voltage drop of the charging cable 130 to be less than a predetermined threshold.

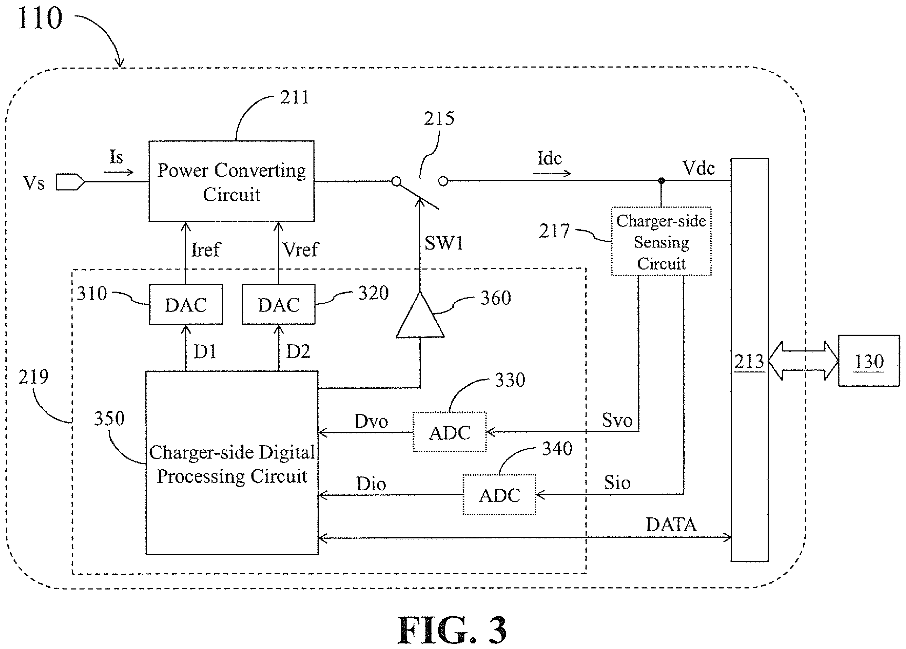

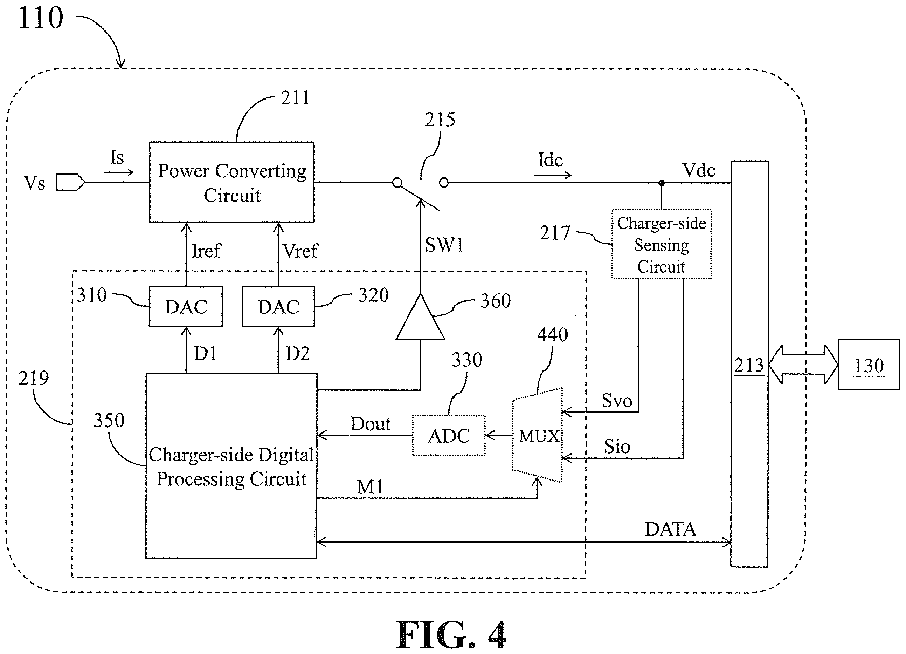

Please refer to FIG. 3 and FIG. 4, which show simplified functional block diagrams of the adaptive power converter 110 in FIG. 2 according to different embodiments of the present disclosure.

In the embodiment of FIG. 3, the charger-side control circuit 219 of the adaptive power converter 110 comprises a first DAC (digital-to-analog converter) 310, a second DAC 320, a first charger-side ADC (analog-to-digital converter) 330, a second charger-side ADC 340, and charger-side digital processing circuit 350.

The first DAC 310 is coupled with the power converting circuit 211, and arranged to operably generate a reference current signal Iref according to a first digital value D1 and to operably utilize the reference current signal Iref to control the power converting circuit 211 to adjust the magnitude of the DC current signal Idc. The second DAC 320 is coupled with the power converting circuit 211, and arranged to operably generate a reference voltage signal Vref according to a second digital value D2 and to operably utilize the reference voltage signal Vref to control the power converting circuit 211 to adjust the magnitude of the DC voltage signal Vdc. The first charger-side ADC 330 is coupled between the charger-side sensing circuit 217 and the charger-side digital processing circuit 350, and arranged to convert the output voltage sensing signal Svo into an output voltage sensing value Dvo. The second charger-side ADC 340 is coupled between the charger-side sensing circuit 217 and the charger-side digital processing circuit 350, and arranged to operably convert the output current sensing signal Sio into an output current sensing value Dio. The charger-side digital processing circuit 350 is coupled with the communication interface 213, the first DAC 310, and the second DAC 320. The charger-side digital processing circuit 350 is capable of calculating a charger-side voltage value CSV based on the output voltage sensing value Dvo and calculating a charger-side current value CSI based on the output current sensing value Dio.

The charger-side control circuit 219 of the embodiment of FIG. 4 comprises the first DAC 310, the second DAC 320, and the first charger-side ADC 330 mentioned above, and a charger-side multiplexer 440, but connection of the first charger-side ADC 330 of FIG. 4 is different from the embodiment of FIG. 3.

In the embodiment of FIG. 4, the charger-side multiplexer 440 is coupled with the charger-side sensing circuit 217, and arranged to selectively output the output voltage sensing signal Svo or the output current sensing signal Sio under control of a charger-side selection signal M1. The first charger-side ADC 330 is coupled between the charger-side multiplexer 440 and the charger-side digital processing circuit 350, and arranged to operably convert the output signal of the charger-side multiplexer 440 into a corresponding charger-side sensing value Dout. The charger-side digital processing circuit 350 is capable of generating the charger-side selection signal M1 for switching the output signal of the charger-side multiplexer 440, and capable of calculating the charger-side voltage value CSV or the charger-side current value CSI based on the charger-side sensing value Dout.

For example, when the charger-side multiplexer 440 outputs the output voltage sensing signal Svo to the first charger-side ADC 330, the charger-side digital processing circuit 350 may calculate the charger-side voltage value CSV based on the charger-side sensing value Dout generated by the first charger-side ADC 330. When the charger-side multiplexer 440 outputs the output current sensing signal Sio to the first charger-side ADC 330, the charger-side digital processing circuit 350 may calculate the charger-side current value CSI based on the charger-side sensing value Dout generated by the first charger-side ADC 330.

In the adaptive power converter 110, the power converting circuit 211 may adopt various existing current loop control mechanism to control the magnitude of the DC current signal Idc based on the reference current signal Iref. Similarly, the power converting circuit 211 may adopt various existing voltage loop control mechanism to control the magnitude of the DC voltage signal Vdc based on the reference voltage signal Vref. In practice, the power converting circuit 211 may perform only one of the aforementioned current loop control mechanism and voltage loop control mechanism at a time instead of simultaneously performing both mechanisms, so as to simplify the circuitry control complexity.

The charger-side digital processing circuit 350 is capable of adjusting the first digital value D1 or the second digital value D2 based on the content of the data signal DATA transmitted from the communication interface 213, the charger-side voltage value CSV, and/or the charger-side current value CSI, and capable of generating a charger-side switch signal SW1 to control the switching operation of the output switch 215.

The charger-side digital processing circuit 350 may adjust the first digital value D1 or the second digital value D2 based on the content of the data signal DATA, the charger-side voltage value CSV, and/or the charger-side current value CSI to thereby adjust the magnitude of the reference voltage signal Vref or the reference current signal Iref, so as to conduct a close loop control within the charger-side control circuit 219. As a result, the accuracy of the DC current signal Idc and the DC voltage signal Vdc generated by the power converting circuit 211 can be further increased.

In some embodiments, the charger-side digital processing circuit 350 may transmit the charger-side voltage value CSV or the charger-side current value CSI to the device-side control circuit 265 of the mobile device 104 through the data signal DATA.

In practice, a charger-side driver circuit 360 may be arranged between the charger-side digital processing circuit 350 and the output switch 215 to drive the charger-side switch signal SW1.

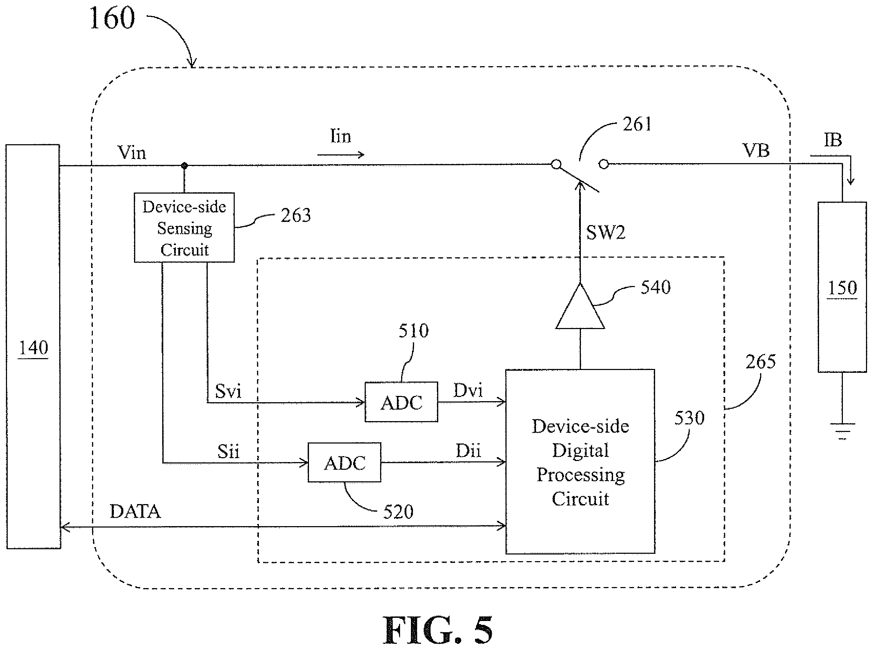

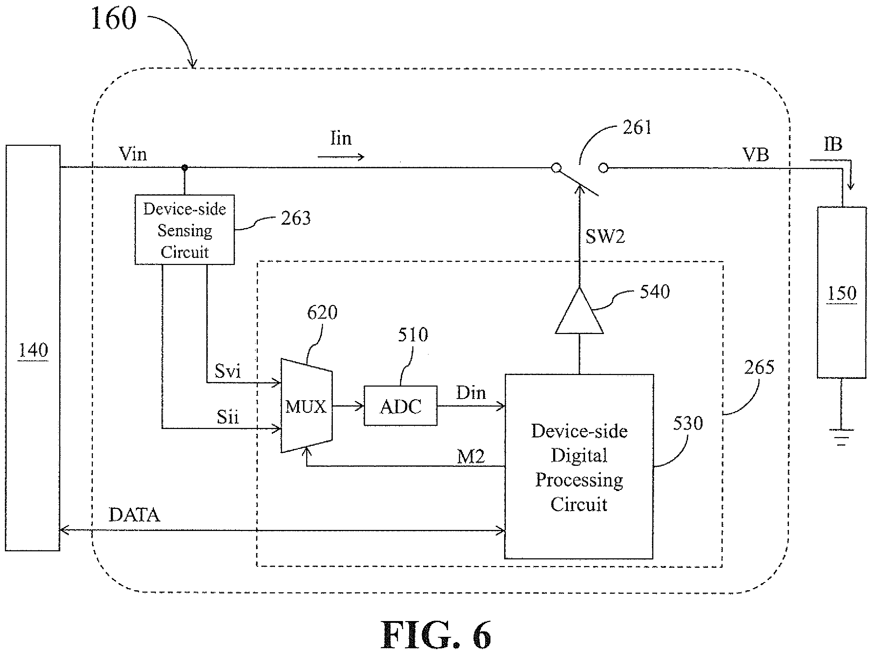

Please refer to FIG. 5 and FIG. 6, which show simplified functional block diagrams of the charging control circuit 160 in FIG. 2 according to different embodiments of the present disclosure.

In the embodiment of FIG. 5, the device-side control circuit 265 of the charging control circuit 160 comprises a first device-side ADC 510, a second device-side ADC 520, and a device-side digital processing circuit 530. The first device-side ADC 510 is coupled with the device-side sensing circuit 263, and arranged to operably convert the input voltage sensing signal Svi into a corresponding input voltage sensing value Dvi. The second device-side ADC 520 is coupled with the device-side sensing circuit 263, and arranged to operably convert the input current sensing signal Sii into a corresponding input current sensing value Dii. The device-side digital processing circuit 530 is coupled with the device-side connector 140, the input switch 261, the first device-side ADC 510, and the second device-side ADC 520. The device-side digital processing circuit 530 is capable of calculating the device-side voltage value DSV based on the input voltage sensing value Dvi and calculating the device-side current value DSI based on the input current sensing value Dii.

The device-side control circuit 265 of the embodiment of FIG. 6 comprises the first device-side ADC 510 and the device-side digital processing circuit 530 mentioned above and a device-side multiplexer 620, but the connection of the first device-side ADC 510 of FIG. 6 is different from the embodiment of FIG. 5.

In the embodiment of FIG. 6, the device-side multiplexer 620 is coupled with the device-side sensing circuit 263, and arranged to selectively output the input voltage sensing signal Svi or the input current sensing signal Sii under control of a device-side selection signal M2. The first device-side ADC 510 is coupled with the output terminal of the device-side multiplexer 620, and arranged to operably convert the output signal of the device-side multiplexer 620 into a corresponding device-side sensing value Din. The device-side digital processing circuit 530 is capable of generating the device-side selection signal M2 for switching the output signal of the device-side multiplexer 620, and capable of calculating the device-side voltage value DSV or the device-side current value DSI based on the device-side sensing value Din.

For example, when the device-side multiplexer 620 outputs the input voltage sensing signal Svi to the first device-side ADC 510, device-side digital processing circuit 530 may calculate the device-side voltage value DSV based on the device-side sensing value Din generated by the first device-side ADC 510. When the device-side multiplexer 620 outputs the input current sensing signal Sii to the first device-side ADC 510, device-side digital processing circuit 530 may calculate the device-side current value DSI based on the device-side sensing value Din generated by the first device-side ADC 510.

In the charging control circuit 160, the device-side digital processing circuit 530 is capable of generating the device-side switch signal SW2 for controlling the input switch 261 based on the device-side voltage value DSV or the device-side current value DSI to thereby control the magnitude of the charging voltage signal VB and the charging current signal IB of the battery 150.

For example, when the device-side digital processing circuit 530 determines that the charging voltage signal VB or the charging current signal IB exceeds (or below) an acceptable range based on the device-side voltage value DSV or the device-side current value DSI, the device-side digital processing circuit 530 may utilize the device-side switch signal SW2 to turn off the input switch 261. When the battery 150 is fully charged or charged to a predetermined level, the device-side digital processing circuit 530 may utilize the device-side switch signal SW2 to turn off the input switch 261 to avoid the battery 150 to be over charged.

In some embodiments, the device-side digital processing circuit 530 may use the device-side voltage value DSV or the device-side current value DSI to conduct related judgement to generate the data signal DATA, or may transmit the device-side voltage value DSV or the device-side current value DSI to the charger-side control circuit 219 of the adaptive power converter 110 through the data signal DATA.

In operations, the device-side control circuit 265 may turn off the input switch 261 when the device-side voltage value DSV exceeds a threshold voltage value or when the device-side current value DSI exceeds a threshold current value to protect the battery 150 and related circuits.

In practice, a device-side driver circuit 540 may be arranged between the device-side digital processing circuit 530 and the input switch 261 to drive the device-side switch signal SW2.

The actual operating environment of the mobile device charging system 100 is mainly determined by the user's demand and habit. Therefore, some foreign objects may enter the opening of the device-side connector 140 of the mobile device 104 due to the operating environment issues. For example, when the user put the mobile device charging system 100 in the pocket, backpack, or handbag, the floss, hair, textile fiber, or other tiny object may enter the opening of the device-side connector 140 and contact with the conducting pins of the device-side connector 140.

Once the foreign object is conductive, an abnormal current path may occur at the opening of the device-side connector 140 and cause leakage current.

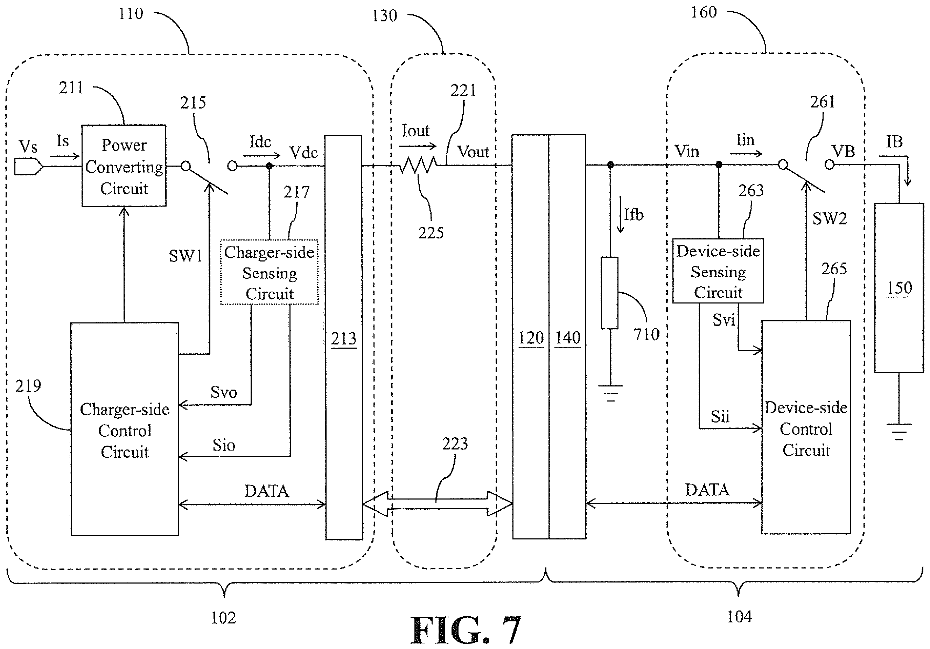

For example, FIG. 7 shows a simplified functional block diagram of the mobile device charging system 100 when a foreign object presents therein according to one embodiment of the present disclosure. As shown in FIG. 7, when a foreign object 710 contacts with the conducting pins of the device-side connector 140 due to some causes, an abnormal current path may be formed at the opening of the device-side connector 140 and result in a leakage current Ifb to occur in the device-side connector 140. When the leakage current Ifb is too large, it may overheat the device-side connector 140, the output terminal 120, or other neighboring components or objects, and thus cause safety concerns.

In order to increase the safety during the charging process, the adaptive power converter 110 or the charging control circuit 160 is capable of dynamically determining whether any abnormal leakage current exists in the power transmission path between the mobile charger 102 and the mobile device 104 (e.g., at the device-side connector 140) based on the sensing result in respect of the signal on the power input path (e.g., the signal Vin, Iin, VB, and/or IB).

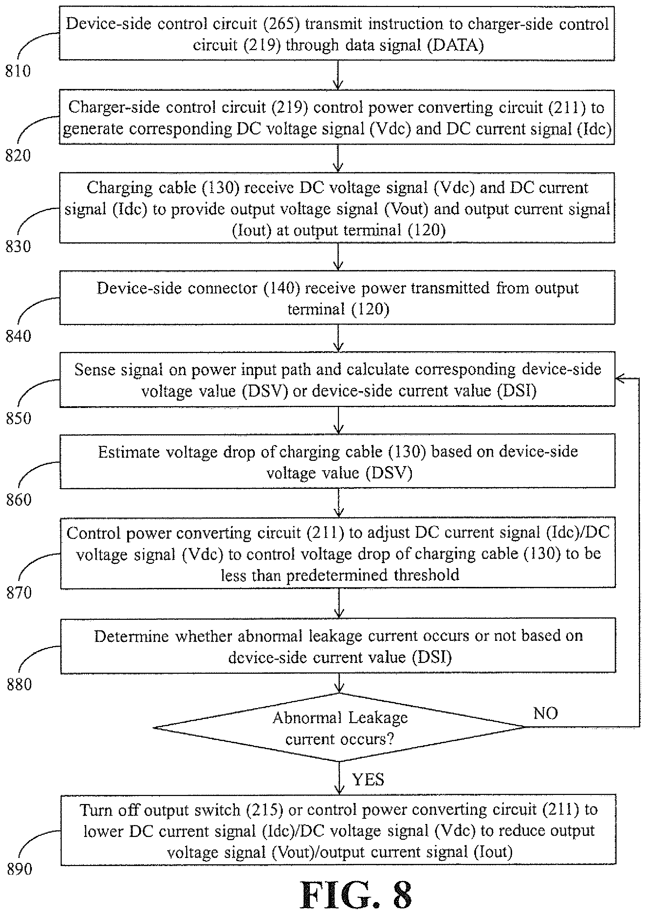

The operations of the mobile device charging system 100 will be further described in more details by reference to FIG. 8. FIG. 8 shows a simplified flowchart of a mobile device charging method according to one embodiment of the present disclosure.

When the output terminal 120 of the mobile charger 102 is coupled with the device-side connector 140 of the mobile device 104, the charging control circuit 160 and the adaptive power converter 110 may communicate through the charging cable 130 to conduct one-way or two-way communications.

When the charging control circuit 160 requires the adaptive power converter 110 to supply power for charging the mobile device 104, the device-side control circuit 265 may perform the operation 810 in FIG. 8.

In the operation 810, the device-side control circuit 265 may transmit related instructions to the charger-side control circuit 219 of the adaptive power converter 110 through the data signal DATA. For example, the device-side digital processing circuit 530 of the device-side control circuit 265 may transmit a target voltage value VTG and/or a target current value ITG to the charger-side digital processing circuit 350 of the charger-side control circuit 219 through the data signal DATA in the operation 810.

Then, the charger-side control circuit 219 performs the operation 820.

In the operation 820, the charger-side control circuit 219 may control the power converting circuit 211 to generate corresponding DC voltage signal Vdc and DC current signal Idc. For example, the charger-side digital processing circuit 350 of the charger-side control circuit 219 may adjust the aforementioned first digital value D1 and second digital value D2 based on the content of the data signal DATA, so as to utilize the reference current signal Iref to control the power converting circuit 211 to adjust the magnitude of the DC current signal Idc, and to utilize the reference voltage signal Vref to control the power converting circuit 211 to adjust the magnitude of the DC voltage signal Vdc.

In the operation 830, the charging cable 130 receives the DC voltage signal Vdc and the DC current signal Idc generated by the power converting circuit 211 through the communication interface 213 to provide the output voltage signal Vout and the output current signal lout at the output terminal 120.

In the operation 840, the device-side connector 140 receives the power transmitted from the output terminal 120 to form the input voltage signal Vin and the input current signal Iin actually received by the mobile device 104.

In the operation 850, the device-side sensing circuit 263 may sense the signal on the power input path (e.g., signal Vin, Iin, VB, and/or IB) to generate a corresponding sensing result (such as the aforementioned input voltage sensing signal Svi and/or input current sensing signal Sii). In addition, the device-side control circuit 265 may calculate the corresponding device-side voltage value DSV and/or device-side current value DSI based on the sensing result of the device-side sensing circuit 263.

Alternatively, other computing circuit in the mobile device 104 (not shown) may be employed to calculate the corresponding device-side voltage value DSV and/or device-side current value DSI based on the sensing result of the device-side sensing circuit 263, and then the device-side digital processing circuit 530 reads the device-side voltage value DSV and/or the device-side current value DSI from the computing circuit.

In the operation 860, the charger-side control circuit 219 or the device-side control circuit 265 may dynamically estimate the voltage drop of the charging cable 130 based on the device-side voltage value DSV.

In one example, the device-side digital processing circuit 530 of the device-side control circuit 265 transmits the device-side voltage value DSV corresponding to the signal on the power input path to the charger-side control circuit 219 through the data signal DATA in the operation 860. In this situation, the charger-side control circuit 219 may calculate the corresponding charger-side voltage value CSV based on the sensing result of the charger-side sensing circuit 217 (e.g., the aforementioned output voltage sensing signal Svo), and calculate a difference between the charger-side voltage value CSV and the device-side voltage value DSV to generate a voltage drop estimation value of the charging cable 130.

In an embodiment, the charger-side control circuit 219 may calculate the corresponding charger-side voltage value CSV based on the sensing result of the charger-side sensing circuit 217 in the operation 860, and then transmit the charger-side voltage value CSV to the device-side digital processing circuit 530 of the device-side control circuit 265 through the data signal DATA. In this situation, the device-side digital processing circuit 530 may calculate a difference between the charger-side voltage value CSV and the device-side voltage value DSV to generate the voltage drop estimation value of the charging cable 130.

In yet another embodiment, the device-side digital processing circuit 530 of the device-side control circuit 265 may calculate a difference between the target voltage value VTG and the device-side voltage value DSV in the operation 860 to generate the voltage drop estimation value of the charging cable 130.

In the operation 870, the adaptive power converter 110 may control the power converting circuit 211 to adjust the DC current signal Idc or the DC voltage signal Vdc to thereby control the voltage drop of the charging cable 130 to be less than a predetermined threshold.

For example, where the voltage drop estimation value of the charging cable 130 is generated by the charger-side control circuit 219, the charger-side control circuit 219 may control the power converting circuit 211 to adjust the magnitude of at least one of the DC current signal Idc and the DC voltage signal Vdc based on the voltage drop estimation value in the operation 870 to maintain the voltage drop of the charging cable 130 to be less than the predetermined threshold.

In some embodiments where the voltage drop estimation value of the charging cable 130 is generated by the device-side control circuit 265, the device-side digital processing circuit 530 of the device-side control circuit 265 may generate a corresponding adjustment instruction based on the voltage drop estimation value in the operation 870, and then transmit the adjustment instruction to the charger-side control circuit 219 through the data signal DATA. Then, the charger-side control circuit 219 may control the power converting circuit 211 to adjust the magnitude of at least one of the DC current signal Idc and the DC voltage signal Vdc based on the received adjustment instruction to maintain the voltage drop of the charging cable 130 to be less than the predetermined threshold.

In the operation 880, the charger-side control circuit 219 or the device-side control circuit 265 monitor and determine whether abnormal leakage current (e.g., the leakage current Ifb caused by the foreign object 710 at the device-side connector 140) occurs in the power transmission path between the mobile charger 102 and the mobile device 104 based on the device-side current value DSI.

In one embodiment, for example, the device-side digital processing circuit 530 of the device-side control circuit 265 may transmit the device-side current value DSI corresponding to the signal on the power input path to the charger-side control circuit 219 through the data signal DATA in the operation 880. In this situation, the charger-side control circuit 219 may calculate the corresponding charger-side current value CSI based on the sensing result of the charger-side sensing circuit 217 (e.g., the aforementioned output current sensing signal Sio), and utilize the charger-side digital processing circuit 350 to compare the charger-side current value CSI with the device-side current value DSI. If the charger-side current value CSI exceeds the device-side current value DSI by more than a predetermined value, the charger-side digital processing circuit 350 may determine that abnormal leakage current occurs in the power transmission path between the mobile charger 102 and the mobile device 104 (e.g., at the device-side connector 140).

In another embodiment, the charger-side control circuit 219 may calculate the corresponding charger-side current value CSI based on the sensing result of the charger-side sensing circuit 217 in the operation 880, and transmit the charger-side current value CSI to the device-side control circuit 265 through the data signal DATA. In this situation, the device-side digital processing circuit 530 of the device-side control circuit 265 may compare the charger-side current value CSI with the device-side current value DSI. If the charger-side current value CSI exceeds the device-side current value DSI by more than a predetermined value, the device-side digital processing circuit 530 may determine that abnormal leakage current occurs in the power transmission path between the mobile charger 102 and the mobile device 104 (e.g., at the device-side connector 140).

In yet another embodiment, the device-side digital processing circuit 530 of the device-side control circuit 265 may compare the aforementioned target current value ITG with the device-side current value DSI in the operation 880. If the target current value ITG exceeds the device-side current value DSI by more than a predetermined value, the device-side digital processing circuit 530 may determine that abnormal leakage current occurs in the power transmission path between the mobile charger 102 and the mobile device 104 (e.g., at the device-side connector 140).

When the mobile device charging system 100 determines that abnormal leakage current occurs in the power transmission path between the mobile charger 102 and the mobile device 104 in the operation 880, it may proceed to the operation 890; otherwise, it may return to the aforementioned operation 850 to continue monitoring the signal on the power input path.

In the operation 890, the adaptive power converter 110 may turn off the output switch 215 or control the power converting circuit 211 to lower the DC current signal Idc or the DC voltage signal Vdc to reduce the output voltage signal Vout or the output current signal lout, to thereby reduce or eliminate the leakage current to avoid possible danger that may be caused by the leakage current.

For example, in some embodiments where the charger-side control circuit 219 is employed to determine whether leakage current occurs, the charger-side digital processing circuit 350 in the operation 890 may adjust the charger-side switch signal SW1 to turn off the output switch 215 or control the power converting circuit 211 to lower the magnitude of at least one of the DC current signal Idc and the DC voltage signal Vdc to thereby reduce the magnitude of at least one of the output voltage signal Vout and the output current signal Iout.

In some embodiments where the device-side control circuit 265 is employed to determine whether leakage current occurs, the device-side digital processing circuit 530 in the operation 890 may generate a decrease instruction and transmit the decrease instruction to the charger-side control circuit 219 through the data signal DATA. The charger-side digital processing circuit 350 may adjust the charger-side switch signal SW1 to turn off the output switch 215 or control the power converting circuit 211 to lower the magnitude of at least one of the DC current signal Idc and the DC voltage signal Vdc to thereby reduce the magnitude of at least one of the output voltage signal Vout and the output current signal lout based on the decrease instruction transmitted from the device-side control circuit 265.

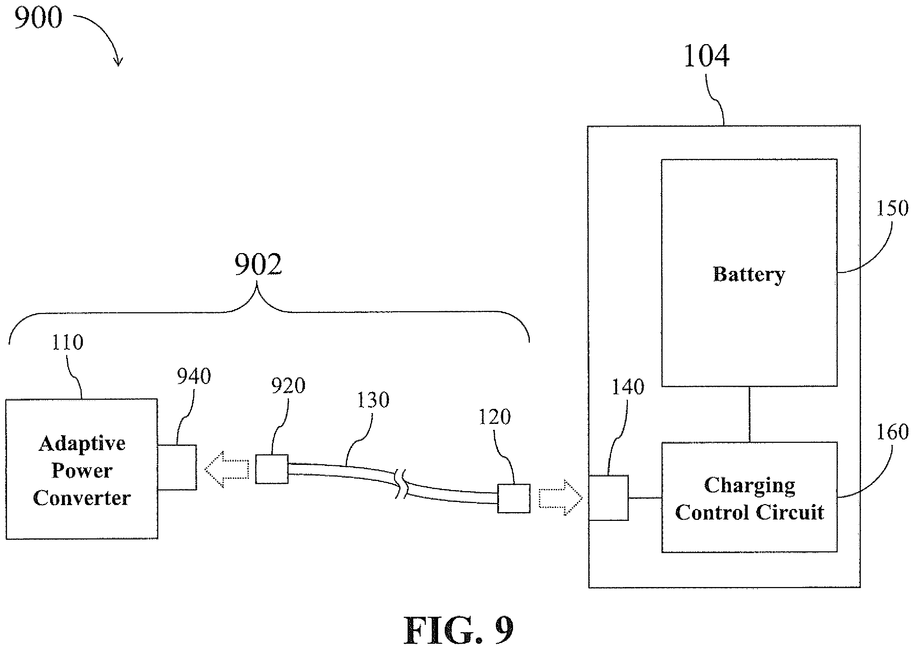

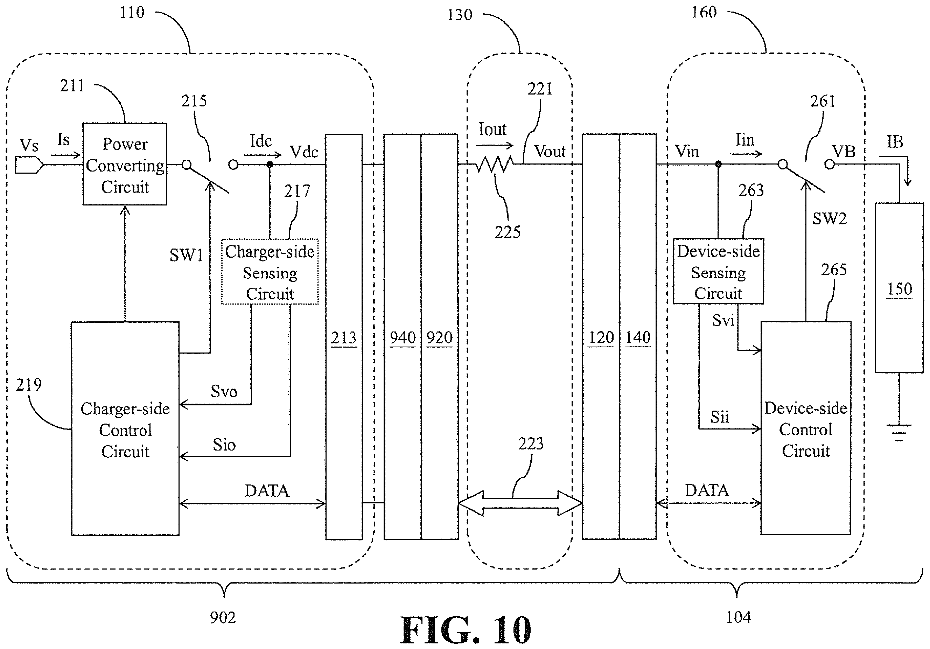

Please refer to FIG. 9 and FIG. 10. FIG. 9 shows a simplified schematic diagram of a mobile device charging system 900 according to another embodiment of the present disclosure. FIG. 10 shows a simplified functional block diagram of the mobile device charging system 900 according to one embodiment of the present disclosure.

The mobile device charging system 900 is similar with the mobile device charging system 100, but the mobile charger 902 of the mobile device charging system 900 further comprises a receiving terminal 920 and a charger-side connector 940.

As shown in FIG. 10, the charger-side connector 940 is coupled with the communication interface 213 of the adaptive power converter 110, and is capable of detachably connecting with the receiving terminal 920. The charging cable 130 of the mobile charger 902 is coupled between the receiving terminal 920 and the output terminal 120, and capable of receiving the DC voltage signal Vdc and the DC current signal Idc generated by the power converting circuit 211 through the receiving terminal 920, the charger-side connector 940, and the communication interface 213.

In other words, the charging cable 130 of the mobile device charging system 900 is indirectly connected with the adaptive power converter 110 through the receiving terminal 920 and the charger-side connector 940, instead of directly connecting with the adaptive power converter 110. Accordingly, the charging cable 130 can be separate from the adaptive power converter 110.

The foregoing descriptions regarding the connections, implementations, operations, and related advantages of other corresponding functional blocks in FIG. 1 through FIG. 8 are also applicable to the embodiment of FIG. 9 and FIG. 10. For the sake of brevity, those descriptions will not be repeated here.

Similar with the mobile device charging system 100, the charger-side control circuit 219 or the device-side control circuit 265 of the mobile device charging system 900 is capable of dynamically estimating the voltage drop of the charging cable 130, and then instructing the adaptive power converter 110 to adjust the magnitude of the output DC voltage signal and/or the output DC current signal based on the voltage estimation drop value, so as to control the voltage drop of the charging cable 130 to be less than the predetermined threshold. Accordingly, even the charging cable 130 is replaced by another charging cable with different specifications, the voltage and current supplied from the mobile charger 902 to the mobile device 104 can be maintain in the safe range, without causing overheat problem due to the replacement of the charging cable.

As a result, the user is allowed to replace the charging cable to cooperate with the adaptive power converter 110. For example, the user is allowed to replace the original charging cable 130 with a charging cable having a longer length, capable of carrying larger current, or made by the more reliable materials.

Obviously, the architecture of the aforementioned the mobile device charging system 900 offer more replacement flexibility of the charging cable 130 to the user, thereby greatly improving the usage convenience and application scope of the adaptive power converter 110.

In addition, similar to the mobile device charging system 100, the charger-side control circuit 219 or the device-side control circuit 265 of the mobile device charging system 900 is capable of dynamically determining whether abnormal leakage current occurs in the power transmission path between the mobile charger 102 and the mobile device 104. Accordingly, when the foreign object presents at the device-side connector 140 or the charger-side connector 940 and causes leakage current, the mobile device charging system 900 may perform the aforementioned operation 890 to utilize the adaptive power converter 110 to turn off the output switch 215 or to control the power converting circuit 211 to lower the DC current signal Idc/the DC voltage signal Vdc, so as to reduce the output voltage signal Vout/the output current signal Iout, thereby reducing or eliminating the leakage current.

It can be appreciated from the foregoing descriptions that the mobile chargers 102 and 902 is capable of supplying larger output current signal Iout to the mobile device 104, to thus the charging speed of the mobile device 104 can be effectively increased.

In addition, since the adaptive power converter 110 adaptively adjusts the magnitudes of the DC voltage signal Vdc and the DC current signal Idc based on the instruction of the charging control circuit 160, the mobile chargers 102 and 902 can be employed to charge various types of mobile devices, and thus have a very wide application scope.

Furthermore, since the adaptive power converter 110 or the charging control circuit 160 is capable of dynamically estimating the voltage drop of the charging cable 130 and then conducting adaptive operation to control the voltage drop of the charging cable 130 to be less than the predetermined threshold, different charging cable is thus allowed to be employed to cooperate with the adaptive power converter 110, thereby improving the selection flexibility of the charging cable and also increasing the safety, convenience, and application scope of the mobile chargers 102 and 902.

Additionally, the adaptive power converter 110 or the charging control circuit 160 is also capable of automatically determining whether abnormal leakage current occurs in the power transmission path between the mobile charger 102 and the mobile device 104 or not, and then conducting corresponding operation. Hence, the safety during the charging process can be effectively ensured, thereby lowering the danger when using large current to charge the mobile device.

Please note that the executing order of the operations in FIG. 8 is merely an exemplary embodiment, rather than a restriction to practical implementations. For example, the operations 880 and 890 may be instead performed before the operation 860. In some embodiments, the operations 880 and 890 may be omitted while reserving the operations 860 and 870. In other embodiments, the operations 860 and 870 may be omitted while reserving the operations 880 and 890.

In addition, the output switch 215, the charger-side sensing circuit 217, the charger-side driver circuit 360, and/or the device-side driver circuit 540 may be omitted in some embodiments to simplify the circuitry complexity. Additionally, in the embodiments where the charger-side sensing circuit 217 is omitted, the first charger-side ADC 330, the second charger-side ADC 340, and the charger-side multiplexer 440 in FIG. 3 or FIG. 4 can be omitted to further simplify the circuitry complexity.

Certain terms are used throughout the description and the claims to refer to particular components. One skilled in the art appreciates that a component may be referred to as different names. This disclosure does not intend to distinguish between components that differ in name but not in function. In the description and in the claims, the term "comprise" is used in an openended fashion, and thus should be interpreted to mean "include, but not limited to." The tem "couple" is intended to compass any indirect or direct connection. Accordingly, if this disclosure mentioned that a first device is coupled with a second device, it means that the first device may be directly or indirectly connected to the second device through electrical connections, wireless communications, optical communications, or other signal connections with/without other intermediate devices or connection means.

The term "and/or" may comprise any and all combinations of one or more of the associated listed items. In addition, the singular forms "a," "an," and "the" herein are intended to comprise the plural forms as well, unless the context clearly indicates otherwise.

The term "voltage signal" used throughout the description and the claims may be expressed in the format of a current in implementations, and the term "current signal" used throughout the description and the claims may be expressed in the format of a voltage in implementations.

The invention is defined by claim 1. The present disclosure can be summarized as a mobile device charging system including a mobile charger and a mobile device. The mobile charger includes: an adaptive power converter for receiving data signals and generating a DC signal; an output terminal; and a charging cable for transmitting the data signals and receiving the DC signal to provide an output signal at the output terminal. The mobile device includes: a device-side connector for receiving power transmitted from the output terminal; and a charging control circuit for generating and transmitting the data signals to the adaptive power converter through the device-side connector and the charging cable. The adaptive power converter adjusts the magnitude of the DC signal according to the data signals to control the voltage drop of the charging cable to be less than a predetermined threshold.

## Claims

1. A charging control circuit (160) for a mobile device (104) being configured to be charged by a mobile charger (102; 902), the charging control circuit (160) comprising a device-side connector (140) and a battery (150), wherein the mobile charger (102; 902) comprises a power converting circuit (211) and a communication interface (213), while a power output path is arranged between the power converting circuit (211) and the communication interface (213), the charging control circuit (160) comprising:
an input switch (261), positioned on a power input path arranged between the device-side connector (140) and the battery (150),
wherein the device-side connector (140) is configured to be detachably connected to an output terminal (120) of the mobile charger (102,902) such that when the power converting circuit (211) transmits a DC voltage signal (Vdc) and a DC current signal (Idc) to a charging cable (130) through the communication interface (213), and the charging cable (130) provides an output voltage signal (Vout) and an output current signal (lout) to the output terminal (120) detachably connected with the device-side connector (140), the device-side connector (140) receives power transmitted from the output terminal (120); a device-side sensing circuit (263), arranged to operably sense signal on the power input path (Vin; Iin; VB; IB); and
a device-side control circuit (265), coupled with the device-side connector (140) and the input switch (261), and arranged to operably control the input switch (261); **characterised in that** the device-side control circuit (265) is arranged to operably generate a corresponding device-side voltage value (DSV) based on sensing result of the device-side sensing circuit (263), or to operably read the device-side voltage value (DSV) from other circuit, and when the mobile charger (102; 902) transmits a charger-side voltage value (CSV) corresponding to signal on the power output path (Vdc; Idc) to the device-side control circuit (265) through the data signal (DATA), the device-side control circuit (265) is arranged to operably calculate a difference between the charger-side voltage value (CSV) and the device-side voltage value (DSV) to generate a voltage drop estimation value of the charging cable (130);
wherein the device-side control circuit (265) is further arranged to operably generate a corresponding adjustment instruction based on the voltage drop estimation value, and to operably transmit the adjustment instruction to the mobile charger (102; 902) through the data signal (DATA) to instruct the mobile charger (102; 902) to control the power converting circuit (211) to maintain the output voltage signal (Vout) and the output current signal (Iout) supplied to the mobile device (104) in a safe range by adjusting the magnitude of at least one of the DC current signal (Idc) and the DC voltage signal (Vdc) so as to control a voltage drop of the charging cable (130) to be less than a predetermined threshold.

2. The charging control circuit (160) of claim 1, **characterized in that** the device-side control circuit (265) is capable of transmitting a device-side current value (DSI) corresponding to the signal on the power input path (Vin; Iin; VB; IB) to the mobile charger (102; 902) through the data signal (DATA), wherein the mobile charger (102; 902) is capable of comparing the device-side current value (DSI) with a charger-side current value (CSI) corresponding to the signal on the power output path (Vdc; Idc); wherein if the charger-side current value (CSI) exceeds the device-side current value (DSI) by more than a predetermined value, the mobile charger (102; 902) lowers the magnitude of at least one of the DC current signal (Idc) and the DC voltage signal (Vdc) to reduce magnitude of at least one of the output voltage signal (Vout) and the output current signal (Iout).

3. The charging control circuit (160) of claim 1, wherein the mobile charger (102; 902) is capable of transmitting a charger-side current value (CSI) corresponding to the signal on the power output path (Vdc; Idc) to the device-side control circuit (265) through the data signal (DATA), and the device-side control circuit (265) is capable of comparing the charger-side current value (CSI) with a device-side current value (DSI) corresponding to the signal on the power input path (Vin; Iin; VB; IB); wherein if the charger-side current value (CSI) exceeds the device-side current value (DSI) by more than a predetermined value, the device-side control circuit (265) is configured to generate a decrease instruction and transmit the decrease instruction to the mobile charger (102; 902) through the data signal (DATA), wherein the mobile charger (102; 902) lowers the magnitude of at least one of the DC current signal (Idc) and the DC voltage signal (Vdc) based on the decrease instruction to reduce magnitude of at least one of the output voltage signal (Vout) and the output current signal (lout).

4. The charging control circuit (160) of claim 1, **characterized in that** the device-side control circuit (265) is capable of comparing a target current value (ITG) with a device-side current value (DSI) corresponding to the signal on the power input path (Vin; Iin; VB; IB);
wherein if the target current value (ITG) exceeds the device-side current value (DSI) by more than a predetermined value, the device-side control circuit (265) is configured to generate a decrease instruction and transmit the decrease instruction to the mobile charger (102; 902) through the data signal (DATA), wherein the mobile charger (102; 902) lowers the magnitude of at least one of the DC current signal (Idc) and the DC voltage signal (Vdc) based on the decrease instruction to reduce magnitude of at least one of the output voltage signal (Vout) and the output current signal (Iout).

5. The charging control circuit (160) of claim 2, 3, or 4, **characterized in that** the device-side control circuit (265) is configured to calculate the device-side current value (DSI) based on sensing result of the device-side sensing circuit (263) in respect of the signal on the power input path (Vin; Iin; VB; IB), or to read the device-side current value (DSI) from the other circuit.

6. The charging control circuit (160) of claim 1, **characterized in that** the device-side sensing circuit (263) is arranged to operably sense the signal on the power input path (Vin; Iin; VB; IB) to generate an input voltage sensing signal (Svi) and an input current sensing signal (Sii);
wherein the device-side control circuit (265) comprises:
a first device-side ADC (510), coupled with the device-side sensing circuit (263), arranged to operably convert the input voltage sensing signal (Svi) into an input voltage sensing value (Dvi);
a second device-side ADC (520), coupled with the device-side sensing circuit (263), arranged to operably convert the input current sensing signal (Sii) into an input current sensing value (Dii); and
a device-side digital processing circuit (530), coupled with the device-side connector (140), the input switch (261), the first device-side ADC (510), and the second device-side ADC (520), arranged to operably calculate a device-side voltage value (DSV) based on the input voltage sensing value (Dvi), and to operably calculate a device-side current value (DSI) based on the input current sensing value (Dii);
wherein the device-side digital processing circuit (530) is capable of generating the data signal (DATA) and controlling the input switch (261) based on the device-side voltage value (DSV) or the device-side current value (DSI).

7. The charging control circuit (160) of claim 1, **characterized in that** the device-side sensing circuit (263) is arranged to operably sense the signal on the power input path (Vin; Iin; VB; IB) to generate an input voltage sensing signal (Svi) and an input current sensing signal (Sii);
wherein the device-side control circuit (265) comprises:
a device-side multiplexer (620), coupled with the device-side sensing circuit (263), arranged to selectively output the input voltage sensing signal (Svi) or the input current sensing signal (Sii) under control of a device-side selection signal (M2);
a first device-side ADC (510), coupled with an output of the device-side multiplexer (620), arranged to operably convert an output signal of the device-side multiplexer (620) into a corresponding device-side sensing value (Din); and
a device-side digital processing circuit (530), coupled with the device-side connector (140), the input switch (261), the first device-side ADC (510), and the device-side multiplexer (620), arranged to operably generate the device-side selection signal (M2) and to operably calculate a device-side voltage value (DSV) or a device-side current value (DSI) based on the device-side sensing value (Din);
wherein the device-side digital processing circuit (530) is capable of generating the data signal (DATA) and controlling the input switch (261) based on the device-side voltage value (DSV) or the device-side current value (DSI).

8. The charging control circuit (160) of claim 1, **characterized in that** the device-side control circuit (265) is capable of turning off the input switch (261) when a device-side voltage value (DSV) corresponding to the signal on the power input path (Vin; Iin; VB; IB) exceeds a threshold voltage value or when a device-side current value (DSI) corresponding to the signal on the power input path (Vin; Iin; VB; IB) exceeds a threshold current value.

## Patentansprüche

1. Ladesteuerschaltung (160) für ein Mobilgerät (104) eingerichtet, um durch ein mobiles Ladegerät (102; 902) geladen zu werden, wobei die Ladesteuerschaltung (160) einen geräteseitigen Verbinder (140) und eine Batterie (150) umfasst, wobei das mobile Ladegerät (102; 902) eine Stromrichterschaltung (211) und eine Kommunikationsschnittstelle (213) umfasst, während ein Leistungsausgangspfad zwischen der Stromrichterschaltung (211) und der Kommunikationsschnittstelle (213) angeordnet ist, wobei die Ladesteuerschaltung (160) umfasst:
einen Eingangsschalter (261), der auf einem zwischen dem geräteseitigen Verbinder (140) und der Batterie (150) angeordneten Leistungseingangspfad positioniert ist, wobei der geräteseitige Verbinder (140) eingerichtet ist, um lösbar mit einem Ausgangsanschluss (120) des mobilen Ladegeräts (102, 902) verbunden zu sein, sodass wenn die Stromrichterschaltung (211) ein DC-Spannungssignal (Vdc) und ein DC-Stromsignal (Idc) über die Kommunikationsschnittstelle (213) an ein Ladekabel (130) überträgt, und
das Ladekabel (130) ein Ausgangsspannungssignal (Vout) und ein Ausgangsstromsignal (lout) an den Ausgangsanschluss (120), der lösbar mit dem geräteseitigen Verbinder (140) verbunden ist, bereitstellt, der geräteseitige Verbinder (140) Leistung, die von dem Ausgangsanschluss (120) übertragen wird, empfängt;
eine geräteseitige Erfassungsschaltung (263), die eingerichtet ist, ein Signal auf dem Leistungseingangspfad (Vin; Iin; VB; IB) betriebsmäßig zu erfassen; und
eine geräteseitige Steuerschaltung (265), die mit dem geräteseitigen Verbinder (140) und dem Eingangsschalter (261) gekoppelt ist und eingerichtet ist, um den Eingangsschalter (261) betriebsmäßig zu steuern;
**dadurch gekennzeichnet, dass**
die geräteseitige Steuerschaltung (265) eingerichtet ist, um basierend auf einem Erfassungsergebniss der geräteseitigen Erfassungsschaltung (263) betriebsmäßig einen entsprechenden geräteseitigen Spannungswert (DSV) zu erzeugen oder den geräteseitigen Spannungswert (DSV) von einer anderen Schaltung betriebsmäßig zu lesen, und wenn das mobile Ladegerät (102; 902) einen ladegerätseitigen Spannungswert (CSV) entsprechend dem Signal auf dem Leistungsausgangspfad (Vdc; Idc) an die geräteseitige Steuerschaltung (265) durch das Datensignal (DATA) überträgt, die geräteseitige Steuerschaltung (265) ausgebildet ist, betriebsmäßig eine Differenz zwischen dem ladegerätseitigen Spannungswert (CSV) und dem geräteseitige Spannungswert (DSV) zu berechnen, um einen Spannungsabfallschätzwert des Ladekabels (130) zu erzeugen;
wobei die geräteseitige Steuerschaltung (265) ferner eingerichtet ist, betriebsmäßig einen entsprechenden Einstellbefehl basierend auf dem Spannungsabfallschätzwert zu erzeugen, und die Einstellanweisung betriebsmäßig an das mobile Ladegerät (102; 902) durch das Datensignal (DATA) überträgt, um das mobile Ladegerät (102; 902) zu instruieren, die Stromrichterschaltung (211) zu steuern, um das Leistungsausgangsspannungssignal (Vout) und das Ausgangsstromsignal (lout), die an das Mobilgerät (104) zugeführt werden, durch Einstellen der Größe von mindestens einem von dem DC-Stromsignal (Idc) und dem DC-Spannungssignal (Vdc) in einem sicheren Bereich zu halten, um einen Spannungsabfall des Ladekabels (130) derart zu steuern, dass dieser kleiner als ein vorbestimmter Schwellenwert ist.

2. Ladesteuerschaltung (160) nach Anspruch 1, **dadurch gekennzeichnet, dass** die geräteseitige Steuerschaltung (265) einen geräteseitigen Stromwert (DSI) entsprechend dem Signal auf dem Leistungseingangspfad (Vin; lin; VB; IB) an das mobile Ladegerät (102; 902) durch das Datensignal (DATA) übertragen kann, wobei das mobile Ladegerät (102; 902) den geräteseitigen Stromwert (DSI) mit einem dem Signal auf dem Leistungsausgangspfad (Vdc; Idc) entsprechenden ladegeräteseitigen Stromwert (CSI), vergleichen kann;
wobei, wenn der ladegerätseitige Stromwert (CSI) den geräteseitigen Stromwert (DSI) um mehr als einen vorbestimmten Wert übersteigt, das mobile Ladegerät (102; 902) die Größe von zumindest einem der DC-Stromsignale (Idc) und dem DC-Spannungssignal (Vdc) verringert, um die Größe von wenigstens einem von dem Ausgangsspannungssignal (Vout) und dem Ausgangsstromsignal (lout) zu reduzieren.

3. Ladesteuerschaltung (160) nach Anspruch 1, wobei das mobile Ladegerät (102; 902) einen ladegerätseitigen Stromwert (CSI) entsprechend dem Signal auf dem Leistungsausgangspfad (Vdc; Idc) zu der geräteseitige Steuerschaltung (265) durch das Datensignal (DATA) übertragen kann, und die geräteseitige Steuerschaltung (265) den ladegerätseitigen Stromwert (CSI) mit einem geräteseitigen Stromwert (DSI) entsprechend dem Signal auf dem Leistungseingangspfad (Vin; Iin; VB; IB) vergleichen kann;
wobei, wenn der ladegerätseitige Stromwert (CSI) den geräteseitigen Stromwert (DSI) um mehr als einen vorbestimmten Wert übersteigt, die geräteseitige Steuerschaltung (265) eingerichtet ist, einen Verringerungsbefehl zu erzeugen und den Verringerungsbefehl an das mobile Ladegerät (102; 902) durch das Datensignal (DATA) zu übertragen, wobei das mobile Ladegerät (102; 902) die Größe des DC-Stromsignals (Idc) und/oder des DC-Spannungssignals (Vdc) basierend auf dem Verringerungsbefehl reduziert, um die Größe von mindestens einem von dem Ausgangsspannungssignal (Vout) und dem Ausgangsstromsignal (lout) reduziert.

4. Ladesteuerschaltung (160) nach Anspruch 1, **dadurch gekennzeichnet, dass** die geräteseitige Steuerschaltung (265) einen Sollstromwert (ITG) mit einem geräteseitigen Stromwert (DSI) entsprechen dem anliegenden Signal auf dem Leistungseingangspfad (Vin; Iin; VB; IB) vergleichen kann; wobei, wenn der Sollstromwert (ITG) den geräteseitigen Stromwert (DSI) um mehr als einen vorbestimmten Wert übersteigt, die geräteseitige Steuerschaltung (265) eingerichtet ist, einen Verringerungsbefehl zu erzeugen und den Verringerungsbefehl an das mobile Ladegerät (102; 902) durch das Datensignal (DATA) zu übertragen, wobei das mobile Ladegerät (102; 902) die Größe von mindestens einem von dem Gleichstromsignal (Idc) und dem Gleichspannungssignal (Vdc) basierend auf dem Verringerungsbefehls verringert, um die Größe von mindestens einem von dem Ausgangsspannungssignal (Vout) und dem Ausgangsstromsignal (lout) zu reduzieren.

5. Ladesteuerschaltung (160) nach Anspruch 2, 3 oder 4, **dadurch gekennzeichnet, dass** die geräteseitige Steuerschaltung (265) eingerichtet ist, den geräteseitigen Stromwert (DSI) basierend auf dem Erfassungsergebnis der geräteseitigen Erfassungsschaltung (263) zu berechnen unter Berücksichtigung des Signals auf dem Leistungseingangspfad (Vin; lin; VB; IB) oder um den geräteseitigen Stromwert (DSI) von der anderen Schaltung zu lesen.

6. Ladesteuerschaltung (160) nach Anspruch 1, **dadurch gekennzeichnet, dass** die geräteseitige Erfassungsschaltung (263) ausgebildet ist, das Signal auf dem Leistungseingangspfad (Vin; Iin; VB; IB) betriebsmäßig zu erfassen, um ein Eingangsspannungserfassungssignal (Svi) und ein Eingangsstromerfassungssignal (Sii) zu erzeugen;
wobei die geräteseitige Steuerschaltung (265) umfasst:
einen ersten geräteseitigen ADC (510), der mit der geräteseitigen Erfassungsschaltung (263) gekoppelt ist, um das Eingangsspannungserfassungssignal (Svi) betriebsmäßig in einen Eingangsspannungserfassungswert (Dvi) umzuwandeln;
einen zweiten geräteseitigen ADC (520), der mit der geräteseitigen Erfassungsschaltung (263) gekoppelt ist, um das Eingangsstromerfassungssignal (Sii) betriebsmäßig in einen Eingangsstromerfassungswert (Dii) umzuwandeln; und
eine geräteseitige digitale Verarbeitungsschaltung (530), die mit dem geräteseitigen Verbinder (140), dem Eingangsschalter (261), dem ersten geräteseitigen ADC (510) und dem zweiten geräteseitigen ADC (520) gekoppelt ist, die eingerichtet ist, um einen geräteseitigen Spannungswert (DSV) basierend auf dem Eingangsspannungserfassungswert (Dvi) betriebsmäßig zu berechnen und einen geräteseitigen Stromwert (DSI) basierend auf dem Eingangsstromerfassungswert (Dii) betriebsmäßig zu berechnen;
wobei die geräteseitige digitale Verarbeitungsschaltung (530) das Datensignal (DATA) erzeugen kann und den Eingangsschalter (261) basierend auf dem geräteseitigen Spannungswert (DSV) oder dem geräteseitigen Stromwert (DSI) zu steuern.

7. Ladesteuerschaltung (160) nach Anspruch 1, **dadurch gekennzeichnet, dass** die geräteseitige Erfassungsschaltung (263) eingerichtet ist, das Signal auf dem Leistungseingangspfad (Vin; Iin; VB; IB) betriebsmäßig zu erfassen, um ein Eingangsspannungserfassungssignal (Svi) und ein Eingangsstromerfassungssignal (Sii) zu erzeugen;
wobei die geräteseitige Steuerschaltung (265) umfasst:
einen mit der geräteseitigen Erfassungsschaltung (263) gekoppelten geräteseitigen Multiplexer (620), der zum selektiven Ausgeben des Eingangsspannungserfassungssignals (Svi) oder des Eingangsstromerfassungssignals (Sii) unter der Steuerung eines geräteseitigen Auswahlsignals (M2) eingerichtet ist;
einen ersten geräteseitigen ADC (510), der mit einem Ausgang des geräteseitigen Multiplexers (620) gekoppelt ist, um ein Ausgangssignal des geräteseitigen Multiplexers (620) betriebsmäßig in einen entsprechenden geräteseitigen Erfassungswert (Din) umzuwandeln; und
eine mit dem geräteseitigen Verbinder (140), dem Eingangsschalter (261), dem ersten geräteseitigen ADC (510) und dem geräteseitigen Multiplexer (620) gekoppelte geräteseitige digitale Verarbeitungsschaltung (530), die eingerichtet ist das geräteseitige Auswahlsignal (M2) betriebsmäßig zu erzeugen und betriebsmäßig einen geräteseitigen Spannungswert (DSV) oder einen geräteseitigen Stromwert (DSI) basierend auf dem geräteseitigen Erfassungswert (Din) zu berechnen;
wobei die geräteseitige digitale Verarbeitungsschaltung (530) das Datensignal (DATA) erzeugt und den Eingangsschalter (261) basierend auf dem geräteseitigen Spannungswert (DSV) oder dem geräteseitigen Stromwert (DSI) steuern kann.

8. Ladesteuerschaltung (160) nach Anspruch 1, **dadurch gekennzeichnet, dass** die geräteseitige Steuerschaltung (265), den Eingangsschalter (261) auszuschalten kann, wenn ein geräteseitiger Spannungswert (DSV) der dem Signal auf dem Leistungseingangspfad (Vin; lin; VB; IB) entspricht einen Schwellenspannungswert überschreitet oder wenn ein geräteseitiger Stromwert (DSI), der dem Signal auf dem Leistungseingangspfad (Vin; Iin; VB; IB) entspricht, einen Schwellenstromwert überschreitet.

## Revendications

1. Circuit de commande de charge (160) pour un dispositif mobile (104) qui est configuré de manière à être chargé par un chargeur mobile (102 ; 902), le circuit de commande de charge (160) comportant un connecteur côté dispositif (140) et une batterie (150), dans lequel le chargeur mobile (102 ; 902) comporte un circuit de conversion de puissance (211) et une interface de communication (213), tandis qu'un chemin de sortie de puissance est agencé entre le circuit de conversion de puissance (211) et l'interface de communication (213), le circuit de commande de charge (160) comportant :
un commutateur d'entrée (261), positionné sur un chemin d'entrée de puissance agencé entre le connecteur côté dispositif (140) et la batterie (150), dans lequel le connecteur côté dispositif (140) est configuré de manière à être connecté de façon amovible à une borne de sortie (120) du chargeur mobile (102 ; 902), de sorte que, lorsque le circuit de conversion de puissance (211) transmet un signal de tension continue (Vdc) et un signal de courant continu (Idc) à un câble de chargement (130), par le biais de l'interface de communication (213), et lorsque le câble de chargement (130) fournit un signal de tension de sortie (Vout) et un signal de courant de sortie (Iout) à la borne de sortie (120) connectée de manière amovible au connecteur côté dispositif (140), le connecteur côté dispositif (140) reçoit de l'énergie transmise à partir de la borne de sortie (120) ;
un circuit de détection côté dispositif (263), agencé de manière à détecter fonctionnellement un signal sur le chemin d'entrée de puissance (Vin ; Iin ; VB ; IB) ; et
un circuit de commande côté dispositif (265), couplé au connecteur côté dispositif (140) et au commutateur d'entrée (261), et agencé de manière à commander fonctionnellement le commutateur d'entrée (261) ;
**caractérisé en ce que** le circuit de commande côté dispositif (265) est agencé de manière à générer fonctionnellement une valeur de tension côté dispositif correspondante (DSV), sur la base d'un résultat de détection du circuit de détection côté dispositif (263), ou à lire fonctionnellement la valeur de tension côté dispositif (DSV) à partir d'un autre circuit, et lorsque le chargeur mobile (102 ; 902) transmet une valeur de tension côté chargeur (CSV), correspondant au signal sur le chemin de sortie de puissance (Vdc ; Idc), au circuit de commande côté dispositif (265), par le biais du signal de données (DATA), le circuit de commande côté dispositif (265) est agencé de manière à calculer fonctionnellement une différence entre la valeur de tension côté chargeur (CSV) et la valeur de tension côté dispositif (DSV), en vue de générer une valeur d'estimation de chute de tension du câble de chargement (130) ;
dans lequel le circuit de commande côté dispositif (265) est en outre agencé de manière à générer fonctionnellement une instruction d'ajustement correspondante, sur la base de la valeur d'estimation de chute de tension, et à transmettre fonctionnellement l'instruction d'ajustement au chargeur mobile (102 ; 902), par le biais du signal de données (DATA), pour ordonner au chargeur mobile (102 ; 902) de commander au circuit de conversion de puissance (211) de maintenir le signal de tension de sortie (Vout) et le signal de courant de sortie (Iout) fournis au dispositif mobile (104) dans une plage sécuritaire, en ajustant l'amplitude d'au moins l'un parmi le signal de courant continu (Idc) et le signal de tension continue (Vdc), de manière à commander une chute de tension du câble de chargement (130) afin qu'elle soit inférieure à un seuil prédéterminé.

2. Circuit de commande de charge (160) selon la revendication 1, **caractérisé en ce que** le circuit de commande côté dispositif (265) est apte à transmettre une valeur de courant côté dispositif (DSI) correspondant au signal sur le chemin d'entrée de puissance (Vin ; Iin ; VB ; IB) au chargeur mobile (102 ; 902) par le biais du signal de données (DATA), dans lequel le chargeur mobile (102 ; 902) est apte à comparer la valeur de courant côté dispositif (DSI) à une valeur de courant côté chargeur (CSI) correspondant au signal sur le chemin de sortie de puissance (Vdc ; Idc) ;
dans lequel, si la valeur de courant côté chargeur (CSI) dépasse la valeur de courant côté dispositif (DSI) de plus d'une valeur prédéterminée, le chargeur mobile (102 ; 902) abaisse l'amplitude d'au moins l'un parmi le signal de courant continu (Idc) et le signal de tension continue (Vdc) en vue de réduire l'amplitude d'au moins l'un parmi le signal de tension de sortie (Vout) et le signal de courant de sortie (lout).

3. Circuit de commande de charge (160) selon la revendication 1, dans lequel le chargeur mobile (102 ; 902) est apte à transmettre une valeur de courant côté chargeur (CSI) correspondant au signal sur le chemin de sortie de puissance (Vdc ; Idc) au circuit de commande côté dispositif (265), par le biais du signal de données (DATA), et le circuit de commande côté dispositif (265) est apte à comparer la valeur de courant côté chargeur (CSI) à une valeur de courant côté dispositif (DSI) correspondant au signal sur le chemin d'entrée de puissance (Vin ; Iin ; VB ; IB) ; dans lequel, si la valeur de courant côté chargeur (CSI) dépasse la valeur de courant côté dispositif (DSI) de plus d'une valeur prédéterminée, le circuit de commande côté dispositif (265) est configuré de manière à générer une instruction de réduction, et à transmettre l'instruction de réduction au chargeur mobile (102 ; 902), par le biais du signal de données (DATA), dans lequel le chargeur mobile (102 ; 902) abaisse l'amplitude d'au moins l'un parmi le signal de courant continu (Idc) et le signal de tension continue (Vdc) sur la base de l'instruction de réduction en vue de réduire l'amplitude d'au moins l'un parmi le signal de tension de sortie (Vout) et le signal de courant de sortie (lout).

4. Circuit de commande de charge (160) selon la revendication 1, **caractérisé en ce que** le circuit de commande côté dispositif (265) est apte à comparer une valeur de courant cible (ITG) à une valeur de courant côté dispositif (DSI) correspondant au signal sur le chemin d'entrée de puissance (Vin ; Iin ; VB ; IB) ;
dans lequel, si la valeur de courant cible (ITG) dépasse la valeur de courant côté dispositif (DSI) de plus d'une valeur prédéterminée, le circuit de commande côté dispositif (265) est configuré de manière à générer une instruction de réduction, et à transmettre l'instruction de réduction au chargeur mobile (102 ; 902) par le biais du signal de données (DATA), dans lequel le chargeur mobile (102 ; 902) abaisse l'amplitude d'au moins l'un parmi le signal de courant continu (Idc) et le signal de tension continue (Vdc) sur la base de l'instruction de réduction pour réduire l'amplitude d'au moins l'un parmi le signal de tension de sortie (Vout) et le signal de courant de sortie (lout).

5. Circuit de commande de charge (160) selon la revendication 2, 3 ou 4, **caractérisé en ce que** le circuit de commande côté dispositif (265) est configuré de manière à calculer la valeur de courant côté dispositif (DSI) sur la base d'un résultat de détection du circuit de détection côté dispositif (263) relativement au signal sur le chemin d'entrée de puissance (Vin ; Iin ; VB ; IB), ou à lire la valeur de courant côté dispositif (DSI) à partir de l'autre circuit.

6. Circuit de commande de charge (160) selon la revendication 1, **caractérisé en ce que** le circuit de détection côté dispositif (263) est agencé de manière à détecter fonctionnellement le signal sur le chemin d'entrée de puissance (Vin ; Iin ; VB ; IB) en vue de générer un signal de détection de tension d'entrée (Svi) et un signal de détection de courant d'entrée (Sii) ;
dans lequel le circuit de commande côté dispositif (265) comporte :
un premier convertisseur analogique à numérique, ADC, côté dispositif (510), couplé au circuit de détection côté dispositif (263), agencé de manière à convertir fonctionnellement le signal de détection de tension d'entrée (Svi) en une valeur de détection de tension d'entrée (Dvi) ;
un second convertisseur analogique à numérique, ADC, côté dispositif (520), couplé au circuit de détection côté dispositif (263), agencé de manière à convertir fonctionnellement le signal de détection de courant d'entrée (Sii) en une valeur de détection de courant d'entrée (Dii) ; et
un circuit de traitement numérique côté dispositif (530), couplé au connecteur côté dispositif (140), au commutateur d'entrée (261), au premier convertisseur analogique à numérique, ADC, côté dispositif (510) et au second convertisseur analogique à numérique, ADC, côté dispositif (520), agencé de manière à calculer fonctionnellement une valeur de tension côté dispositif (DSV) sur la base de la valeur de détection de tension d'entrée (Dvi), et à calculer fonctionnellement une valeur de courant côté dispositif (DSI) sur la base de la valeur de détection de courant d'entrée (Dii) ;
dans lequel le circuit de traitement numérique côté dispositif (530) est apte à générer le signal de données (DATA) et à commander le commutateur d'entrée (261) sur la base de la valeur de tension côté dispositif (DSV) ou de la valeur de courant côté dispositif (DSI).

7. Circuit de commande de charge (160) selon la revendication 1, **caractérisé en ce que** le circuit de détection côté dispositif (263) est agencé de manière à détecter fonctionnellement le signal sur le chemin d'entrée de puissance (Vin ; Iin ; VB ; IB) en vue de générer un signal de détection de tension d'entrée (Svi) et un signal de détection de courant d'entrée (Sii) ;
dans lequel le circuit de commande côté dispositif (265) comporte :
un multiplexeur côté dispositif (620), couplé au circuit de détection côté dispositif (263), agencé de manière à fournir en sortie, sélectivement, le signal de détection de tension d'entrée (Svi) ou le signal de détection de courant d'entrée (Sii) sous la commande d'un signal de sélection côté dispositif (M2) ;
un premier convertisseur analogique à numérique, ADC, côté dispositif (510), couplé à une sortie du multiplexeur côté dispositif (620), agencé de manière à convertir fonctionnellement un signal de sortie du multiplexeur côté dispositif (620) en une valeur de détection côté dispositif correspondante (Din) ; et
un circuit de traitement numérique côté dispositif (530), couplé au connecteur côté dispositif (140), au commutateur d'entrée (261), au premier convertisseur analogique à numérique, ADC, côté dispositif (510), et au multiplexeur côté dispositif (620), agencé de manière à générer fonctionnellement le signal de sélection côté dispositif (M2) et à calculer fonctionnellement une valeur de tension côté dispositif (DSV) ou une valeur de courant côté dispositif (DSI), sur la base de la valeur de détection côté dispositif (Din) ;
dans lequel le circuit de traitement numérique côté dispositif (530) est apte à générer le signal de données (DATA) et à commander le commutateur d'entrée (261) sur la base de la valeur de tension côté dispositif (DSV) ou de la valeur de courant côté dispositif (DSI).

8. Circuit de commande de charge (160) selon la revendication 1, **caractérisé en ce que** le circuit de commande côté dispositif (265) est apte à mettre hors tension le commutateur d'entrée (261) lorsqu'une valeur de tension côté dispositif (DSV) correspondant au signal sur le chemin d'entrée de puissance (Vin ; Iin ; VB ; IB) dépasse une valeur de tension de seuil, ou lorsqu'une valeur de courant côté dispositif (DSI) correspondant au signal sur le chemin d'entrée de puissance (Vin ; Iin ; VB ; IB) dépasse une valeur de courant de seuil.
